(19) Europäisches Patentamt
European Patent Office
Office européen des brevets

(11) EP 2 502 741 A1

(12) **EUROPEAN PATENT APPLICATION**
published in accordance with Art. 153(4) EPC

(43) Date of publication:
**26.09.2012 Bulletin 2012/39**

(21) Application number: **10830057.5**

(22) Date of filing: **16.11.2010**

(51) Int Cl.:
***B32B 9/00*** *(2006.01)* ***B01J 21/06*** *(2006.01)*
***B01J 35/02*** *(2006.01)* ***C09D 5/16*** *(2006.01)*
***C09D 7/12*** *(2006.01)* ***C09D 183/02*** *(2006.01)*

(86) International application number:
**PCT/JP2010/070410**

(87) International publication number:
**WO 2011/059101 (19.05.2011 Gazette 2011/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.11.2009 JP 2009261375**

(71) Applicant: **Tam Network Co., Ltd.**
**Chiyoda-ku, Tokyo 102-0092 (JP)**

(72) Inventor: **TAMAOKA, Masutake**
**Tokyo 102-0092 (JP)**

(74) Representative: **von Kreisler Selting Werner**
**Deichmannhaus am Dom**
**Bahnhofsvorplatz 1**
**50667 Köln (DE)**

(54) **PHOTOCATALYST COATING**

(57) Provided is an antifouling acrylic board coated with a photocatalyst layer suitable for a surface of a base material made of an acrylic organic material. The antifouling acrylic board includes an acrylic base material, a silica layer constituted of silica as a main constituent and formed on a surface of the acrylic base material, and a photocatalyst layer including titanium oxide particles dispersed in a silica matrix and formed on the silica layer and further includes a binding layer constituted of a silane coupling agent and provided between the surface of the acrylic base material and the silica layer. The silane coupling agent is an epoxy silane coupling agent or a vinyl silane coupling agent.

*Fig. 1*

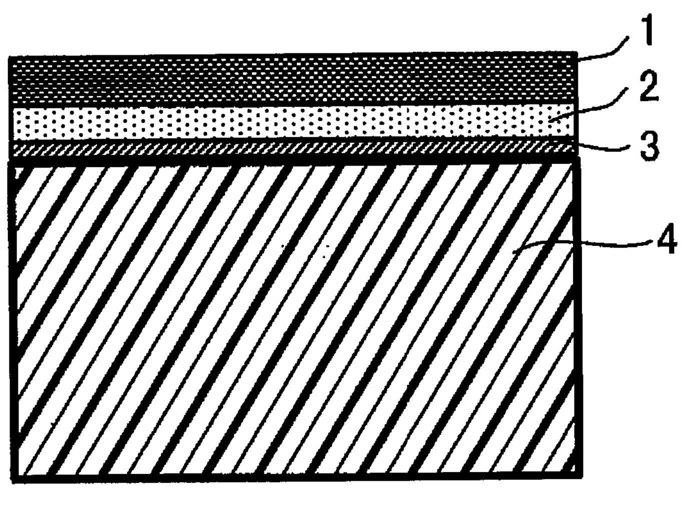




Printed by Jouve, 75001 PARIS (FR)

## Description

[Field Of The Invention]

The present invention relates to a photo catalyst structure of coating a surface of a base material made of organic material and a method of configuring such photo catalyst structure.

[Background Art]

A surface of a base material coated with photo catalyst has functions of antifouling, antifogging, and the like since organic material and the like may be subject to oxidation decomposition and the surface may be made hydrophilic by active oxygen generated on the surface because of activation upon light irradiation such as ultraviolet ray and the like. However, a surface of a base material made of organic material cannot be directly coated with pohotocatalyst because the organic material itself on the surface may be deteriorated by such active oxygen. And it has been usually difficult to consolidate the photo catalyst on the surface of the base material made of organic material since the photo catalyst is inorganic material such as titanium oxide and the like. Therefore, a weather resistant layer, an organic-inorganic complex gradient film, and a photo catalyst material layer are formed in turn on the base material (for example, Patent reference 1).

In addition, it has been disclosed that photocatalyst particles can be strongly glued on any kind of base material for a long period of time without deteriorating a photocatalytic function thereof by gluing the photocatalyst particles on the base material via a binding agent difficult to degrade, for example, silicon compound such as water glass, colloidal silica, and polyorganosiloxane; phosphate such as zinc phosphate and the alminium phosphate; biphosphate; inorganic-material-based binder such as cement; and organic-material-based polymer such as fluorine-based polymer and silicone-based polymer (for example, Patent reference 2).

Further, it is proposed that hydrophobic/water-repellent silicone-based resin paint is applied on a surface of a base material; a suraface of the thus-obatined coating is irradiated with an ultraviolet ray for hydrophilization or hydrophilic silicone-based paint is applied to the suraface of the thus-obatined coating; then, after a hydrophilic silicone-based resin layer constituted of a silicone-based resin coating charactrized by a contact angle of not-exceeding 20 degree with water is formed, an aqueous photocatalyst coating agent including photocatalyst particles and metal oxide binder is applied onto the resin layer; and photocatalyst body is manufactured by heating the thus-obtained photocatalyst layer or irradiating the photocatalyst layer with the ultraviolet ray (for example, Patent reference 3).

On the other hand, various kinds of applications utilizing such photocatalysis are contrived. For example, in solar photovoltaic power generation, each cell is generally installed outdoors to receive much sunlight and it is required to have a large area on which many cells are arrayed closely since the amount of electric power generated by each cell is not necessarily large. Since each cell itself degrades when it is exposed to an outdoor envirionment, a protective member (for example, glass) which can transmit sunlight necessary for power generation is required. However, the surface of the protective member is easily smeared since it is the outdoor environment such that its transmittance with the sunlight is lowered so as to cause trouble of lowering the power generation efficiency. Therefore, it is proposed that an outermost surface side of a semiconductor element constituting a cell is covered with a protective member, a heat releasing layer is provided on a rearmost surface side thereof, and a semiconductor device is provided in that inorganic oxide particles having photocatalyst function to absorb the ultraviolet ray are provided on the surface of the protective member so as to enhance hydrophilicity (for example, Patent reference 4).

[Prior art references]

[Patent reference]

[Patent reference 1] Japanese Patent Application Publication No. 2002-361807
[Patent Reference 2] Japanese Patent Application Publication No. H07-171408
[Patent reference 3] Japanese Patent Application Publication No. 2003-10696
[Patent reference 4] Japanese Patent Application Publication No. 2000-150936

[Summary Of The Invention]

[Problem To Be Solved By The Invention]

However, as a weather resistant layer, an organic-inorganic complex gradient film, and a photocatalytic material layer are formed, a structure thereof becomes complicated such that quality stability of formation may be problematic and the cost of formation becomes too high. Further, in a method of gluing photocatalyst particles on the base material via the binding agent difficult to degrade, for example, it is presumed that binding material such as silane coupling agent and fluorine-based polymer to be directly bonded to titanium oxide particles adheres to a base material (e.g., glass sheet and acrylic sheet) such that the method is not necessarily effective when the titanium oxide is bonded to another material. Further, in a method of applying photocatalyst particles and the like onto a hydrophilic silicone-based resin layer, processes may be complicated and may not be suitable for outdoor application. Therefore, they are not necessarily enough to be applied to the solar photovoltaic power generation as the photocatalyst having an effective antifouling function.

[Means to Solving The Problem]

In particular, when inorganic oxide such as silicon oxide or the like is utilized in fixing photocatalyst particles (for example, anatase) to a surface of a base material, the above-mentioned conventional binding methods are not necessarily effective. Therefore, it is necessary to propose a suitable bining method including compatibility with substance of the base material in order to apply such photocatalyst. Further, since it is not preferable to form a special surface layer through complicated processes, it is necessary to provide a rather simple binding method of binding the photocatalyst.

Then, the present inventor intensely conducted a research so as to find out most suitable binding method of binding photocatalyst onto a base material exhibiting water-repellancy. In particular, the present inventor successfully formed a very strong photocatalyst layer on a surface of a base material by adding a predetermined amount of a preferable predetermined compound to a coating composition including photocatalyst and applying the thus-obtained coating composition onto the water-repellent surface of the base material and drying such applied coating composition.

More specifically, the following is provided. (1) An antifouling acrylic board comprising: an acrylic base material; a silica layer including silica as a main constituent and formed on a surface of the acrylic base material; and a photocatalyst layer including titanium oxide particles dispersed in a silica matrix and formed on the silica layer, wherein the antifouling acrylic board comprises a binding layer constituted of a silane coupling agent and provided between the surface of the acrylic base material and the silica layer, may be provided.

Here, the acrylic base material may include a translucent base material comprising acrylic resin and a translucent base material comprising polycarbonate. Acylic resin is polymer of acrylic acid ester or methacrylic acid ester and is amorphous synthetic resin having high transparency. For example, it may include transparent solid material formed of polymethylmethacrylate resin (abbreviation: PMMA). Also, polycarbonate may be a kind of thermo-plastics and joints between monomer units of the polycarbonate may be constituted of carbonate groups. The above-mentioned silica layer may be what is capable of attaching titanium oxide particles having a photocatalytic function to the surface of the base material. Therefore, it may be a layer of an even thickness, a layer of an uneven thickness, or what covers partially the surface of the base material. It is more preferable to form such a silica layer that surface attack by active oxygen generated by photocatalysis against the acrylic base material can be prevented or controlled. For example, it is preferable for the layer to cover evenly the surface of the base material from the viewpoint of adhesivity and protective capability. The photocatalyst layer may include titanium oxide particles at least partially exposed from silica as a matrix.

(2) The antifouling acrylic board according to the above (1) may be provided wherein the silane coupling agent is a silane coupling agent of an epoxy system.

(3) The antifouling acrylic board according to the above (1) may be provided wherein the silane coupling agent is a silane coupling agent of a vinyl system

(4) The antifouling acrylic board according to any one of the above (1) to (3) may be provided wherein the binding layer is formed by applying to the surface of the acrylic base material a mixed composition including a first composition comprising titanium oxide particles dispersed in an aqueous solvent and having an average primary particle diameter of 5 to 50 nm and an average dispersed particle diameter of 10 to 100 nm and a polymer dispersing agent; a second composition comprising alkoxysilane hydrolysis-polycondensation product; and the silane coupling agent, and the mixed composition having a pH value in a range of 5 to 9.

(5) The antifouling acrylic board according to any one of the above (1) to (4) may be provided wherein the polymer dispersing agent comprises alkylammonium salt of a block copolymerization product including an acid group as a main constituent.

(6) The antifouling acrylic board according to any one of the above (1) to (5) may be provided wherein a total thickness of the silica layer and the photocatalyst layer is not-exceeding 100 nm, and the titanium oxide particles are

fixed in a nearly-isolated dispersion state in the photo catalyst layer.

(7) A weather resistant solar cell utilizing an antifouling acrylic board as recited in any one of the above (1) to (6) as a protective cover.

(8) A method of forming a photocatalyst layer including titanium oxide particles dispersed in a silica matrix on a surface of an acrylic base material, the method comprising the steps of: preparing an aqueous solution having dispersed titanium oxide particles by adding titanium oxide powder and a polymer dispersing agent to water; preparing a tetraethoxysilane hydrolysis-polycondensation product solution by performing hydrolytic polycondensation of alkoxysilane; preparing a mixed solution by mixing the aqueous solution having dispersed titanium oxide particles and the tetraethoxysilane hydrolysis-polycondensation product solution; preparing a photocatalyst coating material adhesive to the acrylic base material by mixing a silane coupling agent with the above mixed solution; and applying the photocatalyst coating material to a surface of the acrylic base material.

(9) The method accoridng to the above (8) wherein an antigelling and stabilizing agent comprising organic amine is mixed in the step of preparing the mixed solution.

The above photocatalyst coating liquid for forming the above photocatalyst layer is a mixed composition including: a first composition comprising titanium oxide particles dispersed in an aqueous solvent and having an average primary particle diameter of 5 to 50 nm and an average dispersed particle diameter of 10 to 100 nm, and a polymer dispersing agent; a second composition comprising alkoxysilane hydrolysis-polycondensation product; and the silane coupling agent, and the mixed composition having a pH value in a range of 5 to 9.

Here, it is preferable for the titanium oxide particles to have an average particle diameter equal to or less than 50 nm as a primary diameter, it is more preferable to have the average particle diameter equal to or less than 30 nm, and it is still more preferable to have the average particle diameter equal to or less than 30 nm. It is preferable for the titanium oxide particles to have an average particle diameter equal to or more than 1 nm as the primary diameter from the viewpoint of easy handling, storage stability, and the like, it is more preferable to have the average particle diameter equal to or more than 10 nm, and it is still more preferable to have the average particle diameter equal to or more than 30 nm. Here, the average particle diameter may be defined as follows. In the measurement by the sedimentation method, the particle diameter may be defined as a diameter of an equivalent sphere having the same sedimentation rate, and in the laser scattering method, it may be defined as a diameter of an equivalent sphere having the same scattering characteristics. Further, the distribution of particle diameters is called a particle size (particle diameter) distribution. In the particle diameter distribution, a specified particle diameter is defined as an average particle diameter D50 when the total mass of powder particles having diameters larger than the specified particle diameter is 50% of the total mass of the entire powder body. These definition and term are well known to the one skilled in the art and are described in various references such as JIS Z 8901 "Powder Body for Test and Particle for Test" and the first chapter of "Basic Physical Properties of Powder" edited by The Society of Powder Technology, Japan (ISBN4-526-05544-1). Then, the volume-converted integrated frequency distribution of the particle diameters can be measured by using a laser scattering-type measurement instrument and the volume-converted distribution is identical to the weight-converted distribution since the density is approximately constant. The particle diameter corresponding to that at 50% in the integrated (cumulative) frequency distribution may be obtained and defined as the average particle diameter D50. Here, the average particle diameter is based on the median value (D50) of the particle size distribution measured with a particle size distribution measurement means by the above-mentioned laser scattering method. As to a means for determining the average particle diameter, various kinds of means have been developed and the development is still being performed such that the value measured by a newly developed means may differ slightly. However, it should be understood that the meaning and significance of the average particle diameter itself is definite, and the means for measuring the mean particle diameter is not necessarily limited to the above-mentioned means.

Here, an aqueous titanium oxide dispersion solution may be prepared using a titanium oxide powder and a polymer dispersing agent as raw materials. As the titanium oxide powder, for example, P25 made by Nippon Aerosil may be preferably used. And, as the polymer dispersing agent, a polymer dispersing agent of a type that makes use of steric repulsion may be used. For example, a dispersing agent having alkylamine salt of polycarboxylic acids may be effective for prevention of sedimentation of pigment and prevention of hard cake (hard precipitation) and has a dispersion effect on a system of a low viscosity such as water-based stain and the like. Further, alkylol ammonium salt having an acid group (for example, trade name: Disperbyk-180 sold by BYK Japan KK) as a dispersing agent having alkylammonium salt of block copolymerization product including an acid group as a main constituent is significantly effective to titanium oxide and inorganic pigment, can lower the viscosity of mill base and the VOC of the coating material, and is effective to pigments in both an acid state and a basic state. And a dispersing agent comprising an aqueous solution of block copolymerization product of high-molecular weight having a group compatible with a pigment constituting a polymer dispersing agent comprising a block copolymerization product having affinity with a pigment as a main constituent (for example, trade name: Disperbyk-190 sold by BYK Japan KK) is significantly effective to pigment concentrate not containing dispersed resin or cosolvent, can be utilized to design a pigment concentrate having excellent storage stability, and is also effective as an ordinary moisturizing dispersing agent. A usage amount of the polymer dispersing agent with

respect to a weight of the titanium oxide powder is, in consideration of dispersing effects, preferably equal to or more than 10 weight% and it is preferably equal to or more than 30 weight% depending on condition. On the other hand, in consideration of a photo catalyst function, it is preferably equal to or less than 100 weight% with respect to a weight of the titanium oxide powder, and it is preferably equal to or less than 60 weight% depending on condition. The aqueous titanium oxide dispersion solution is prepared by performing dispersion stabilization using a disperser, preferably a bead mill disperser.

The alkoxysilane hydrolysis-polycondensation product solution used in producing the photocatalyst coating liquid according to the present invention is obtained by hydrolysis and polycondensation of an alkoxysilane. Although the alkoxysilane type used here is not limited in particular, it is alkoxysilane type expressed by the following general formula (1):

RxSi (OR) 4-x (1),

(here, R is a substituent selected from among the group consisting of an alkyl group, a methyl group, an ethyl group, a propyl group, and so on, and each selected substituent may be the same or different from each other), and it is more preferably the alkoxysilane type expressed by the general formula (1) wherein the R substituent is a lower alkyl group with 1 to 4 carbons, specifically, a methyl group, ethyl group, propyl group, isopropyl group, butyl group, etc., and tetraethoxysilane, methyltriethoxysilane, and dimethyldiethoxysilane can be cited as especially preferable examples. In regard to these alkoxysilane types, just one type may be used solitarily or two or more types may be used as a mixture, or a low condensate obtained by partial hydrolysis may be used.

A method for obtaining the alkoxysilane hydrolysis-polycondensation product solution, constituted of a water-alcohol mixture solution of the alkoxysilane hydrolysis-polycondensation product and obtained by hydrolysis and polycondensation of an alkoxysilane type, is not limited in particular, either, and it is produced, for example, by performing hydrolysis and polycondensation of the alkoxysilane type by causing a sol-gel reaction using an acid or an aluminum alkoxide as a catalyst.

In the above mixining step, a silane coupling agent of vinyl system and/or epoxy system is preferably utilized as a silane coupling agent to be added. Here, the silane coupling agent is expressed by Y-R-Si-$(X)_3$ and is organic silicide having at the same time both groups reactively bonded to an organic material and reactively bonded to an inorganic material inside the molecule. Y is a functional group reactively bonding and typical examples thereof are a vinyl group, an epoxy group, an amino group, and so on. X is a functional group reacting with an inorganic material, is hydrolyzed with water or moisture so as to generate silanol, and is reactively bonded with the inorganic material. An alkoxy group, an acetoxy group, a chloro atom, and so on can be cited as typical examples of X. Vinyl methoxysilane, vinyl ethoxysilane, and the like of vinyl system; N-(2-aminoethyl) 3-amino propyl methyl dimethoxy silane, 3-aminopropyltriethoxysilane, 3-amino propyl trimethoxy silane, N,N'-bis[3-(trimethoxy Cyril) propyl] ethylenediamine, and the like of amino type; 3-glycidoxypropyltrimethoxysilane, 3-glycidoxypropyltrimethoxysilane, 2-(3,4-epoxycyclohexyl)ethyltrimethoxysilane, and the like of epoxy system; 3-methacryloxypropyl trimethoxysilane and the like of methacryloxy system; 3-mercaptopropyltrimethoxysilane and the like of mercapto system; N-(1,3-dimethylbutylidene)-3-triethoxysilyl-1-propanamine and the like of ketimine system; and N-[2-(vinylbenzylamino)ethyl]-3-aminopropyltrimethoxysilane hydrochloride and the like of cation system can be cited as examples of the silane coupling agent. And these silane coupling agents have high binding ability with the above-mentioned polymer dispersing agents contained in the coating liquid and stronger adhesion can be achieved by adding these silane coupling agents.

With respect to the above-mentioned organic amine type, it may be what can work as a stabilizer to prevent gelation during a mixing process of aqueous titanium oxide dispersion solution and alkoxysilane hydrolysis-polycondensation product solution, and a tertiary amine type such as trimethylamine, triethylamine, triethanolamine, etc.; and a hydroxylated quaternary ammonium type such as tetramethylammonium hydroxide (TMAH), tetraethylammonium hydroxide (TEAH), trimethylethanolammonium hydroxide (choline) etc. can be cited as examples, and the tertiary amine type is preferable. In regard to these organic amine types, one of them may be used solitarily or two or more types may be used as a mixture as necessary.

Silver particles may be preferably added to the composition of the uniformly-dispersed photocatalyst coating liquid such that better antibacterial effect may be achieved. In this case, the silver particles that are made to be contained in the composition of the photocatalyst coating liquid should be in a microparticulate form of not more than 10 nm and be dispersed uniformly in the composition, and a content of the silver particles in the composition should normally be not more than about 5-6 weight % and preferably not more than about 2 weight % to avoid blackening of the photocatalyst coating film to be formed.

With respect to a method of having the silver particles contained in the composition of the photocatalyst coating liquid, it can be selected from among various silver particle adding methods such as adding a commercially available product or a separately prepared colloidal silver, and it is not limited in particular, and the silver particles may be added into the aqueous titanium oxide dispersion solution or added into the alkoxysilane hydrolysis-polycondensation product

solution when the photocatalyst coating solution is prepared, or the amount of the silver particles is appropriately divided into two and one is added to the aqueous titanium oxide dispersion solution and the other is added to the alkoxysilane hydrolysis-polycondensation product solution.

Furthermore, a method of adding the silver particles into the aqueous titanium oxide dispersion solution is not limited in particular, from a standpoint of making the silver particles be formed on surfaces of the titanium oxide particles to heighten a charge separation efficiency and thereby increase a photocatalytic activity, it is preferable to add silver nitrate and reduce silver ions by photoreduction or reduction by the polymer dispersing agent that is present on the titanium oxide surfaces for dispersion stabilization to make the silver particles be formed as close to the titanium oxide surfaces as possible, and, for example, a method, where silver nitrate is added to the aqueous titanium oxide dispersion solution and illumination by a black light is performed while stirring to reduce the silver ions mainly by means of electrons generated by a photocatalytic reaction of titanium oxide and make the silver particles grow on the titanium oxide particle surfaces; a method, where silver nitrate is added to the aqueous titanium oxide dispersion solution and the polymer dispersing agent being present on the titanium oxide particle surfaces for dispersion stabilization is used as a reducing agent to reduce the silver ions and form the silver particles near the titanium oxide surfaces while heating, etc., may be applied as necessary; and so on can be cited as examples. By forming the silver particles on the titanium oxide particle surfaces or near the titanium oxide particle surfaces, a merit of increasing the photocatalytic activity (both or either of an antifouling property and an antibacterial property) is provided.

The uniformly-dispersed photocatalyst coating liquid according to the present invention has the following characteristics. (A) the dispersion system thereof is aqueous and even when an organic solvent is contained, it is of a level of ethanol, and the dispersion system is close to neutral, excellent in handling properties, and low in influence on a base material and an environment; (B) because the titanium oxide particles in the photocatalyst coating liquid are dispersed and stabilized at the dispersed particle diameter of not more than 100 nm, the titanium oxide particles are uniformly dispersed in the film at the dispersed particle diameter of not more than 100 nm when the film is formed, and consequently, the titanium oxide particles are fixed in the silica coating film in a state as close as possible to being isolatedly dispersed and an excellent photocatalytic activity is expressed; (C) because the silica-based film of the matrix hardens in approximately half a day under the normal temperature, onsite application is enabled and easy; (D) when the aqueous titanium oxide dispersion solution and the alkoxysilane hydrolysis-polycondensation product solution are stored separately, the titanium oxide particles are dispersed and stabilized over a long term without settling in the aqueous titanium oxide dispersion solution, the alkoxysilane hydrolysis-polycondensation product solution, which becomes the matrix component, is also stabilized over a long term and can be stored for one year or a longer term, and even when the two solutions are mixed, the mixture is stable and does not gel for about one week and is thus excellent in handling properties; and (E) the coating film can be formed according to a wetting property of a base material to be coated and a wide base material applicability is provided.

The above-mentioned photocatalyst coating liquid enables a photocatalytically active composite material to be formed by application onto a surface of any of various base materials, constituted of metal, glass, ceramic, plastic, wood, stone, cement, concrete, a combination of the above, or a laminate of the above, etc., wherein the surface requires both or either of an antifouling property and an antibacterial property, and the formation of a prescribed photocatalyst coating film on the surface of the base material thereby. With the uniformly-dispersed photocatalyst coating liquid according to the present invention, an alcohol concentration in the aqueous solvent can be changed or a surfactant, a silane coupling agent, etc., can be added to become compatible with a wetting property of the base material to be coated. The above-mentioned silane coupling agent is in particular effective with resin such as polycarbonate.

The method for applying the above-mentioned uniformly-dispersed photocatalyst coating liquid onto the surface of the base material is not limited in particular, and because it is preferable with respect to the photocatalyst coating film formed on the base material surface that an average dry film thickness of the matrix film be not more than 100 nm from a standpoint of transparency and durability, a spray coating method is preferable, and a low-pressure spraying machine of high coating efficiency is preferable as a spray coater to be used, and as spraying conditions, it is preferable to optimize a nozzle diameter, spraying distance, and operation speed to make a spraying amount be approximately 10 to 100 $cm^3/m^2$.

Although the photocatalyst coating film formed on the surface of the base material is basically a single layer, in a case where the base material has an organic material surface that is readily degradable or a highly uneven rough surface, a silica-based coating film, formed by coating of an alkoxysilane hydrolysis-polycondensation product, may be formed as necessary to form a first layer serving as a protective layer or a smoothening layer, and the photocatalyst coating film according to the present invention may be applied to form a second layer.

With the photocatalytically active composite material according to the present invention, the dispersed titanium oxide particles with the average dispersed particle diameter of 10 to 100 nm are fixed in a state close to being isolatedly dispersed in the matrix film of the photocatalyst coating film, and by the photocatalytic action operating effectively due to a proportion of a total cross-sectional area occupied by all titanium oxide particles present in a cross section of the same film being made high while maintaining transparency without scattering of visible light, an effect of heightening the photocatalytic activity (both or either of the antifouling property and the antibacterial property) is exhibited.

[Effect Of The Invention]

The thus-obtained photocatalyst layer or photocatalyst coating adheres strongly to an even water-repellent resin surface and is excellent in the weather resistance. The uniformly-dispersed photocatalyst coating liquid to be used is excellent in dispersion stability, does not apply load to the environment, is excellent in handling properties, and enables the photocatalyst coating film of excellent photocatalytic activity (both or either of the antifouling property and the antibacterial property), transparency, and durability to be formed on a surface of a base material by application onto the surface of the base material.

[Brief Description Of The Drawings]

FIG. 1 is a diagram showing schematically a cross section of an antifouling acrylic board according to an embodiment of the present invention.
FIG. 2 is a graph showing optical transmittance of polycarbonate coated with photocatalyst or the like.
FIG. 3 is a graph showing optical transmittance of polycarbonate coated with photocatalyst or the like.
FIG. 4 is a graph showing optical transmittance of polycarbonate coated with photocatalyst or the like.
FIG. 5 is a graph showing optical transmittance of polycarbonate coated with photocatalyst or the like.
FIG. 6 shows graphs showing spectra of the sunlight as defined by JIS (Japanese Industrial Standard).
FIG. 7 is a graph showing a relationship between current and voltage with respect to a method of evaluating a solar cell.
FIG. 8 is a schematic diagram showing a main portion of a solar cell generation.
FIG. 9 is a schematic diagram showing a vegitable garden utilizing a solar cell geneation.
FIG. 10 is a diagram showing schematically how a silane coupling agent is expected to work.
FIG. 11 is a diagram illustrating a principle of light incidence into a protective material with a photocatalyst coating film.
FIG. 12 is a diagram showing schematically reflectance of light in consideration of polarization components.
FIG. 13 is a graph showing a change of reflectance with respect to an incident angle.
FIG. 14 is a schematic diagram with respect to outfield arrangement of a solar power cell.

[Description of Embodiments]

Next, an embodiment according to the present invention will be explained with reference to the drawings. Throughout the drawings, a component and an equivalent part having the same configuration or function may be referred to with the same reference number and the explanation is omitted. Further, in the following explanation, examples of embodiment according to the present are merely shown such that they can be modified without exceeding the scope of the present invention based on the technical common sense of one of skill in the art. Therefore, the scope of the present invetion is not limited to these examples. Further, these drawings are expressed in an emphasized manner for explanation such that the sizes may be different from the actual sizes.
FIG. 1 is a diagram showing schematically a cross section of an antifouling acrylic board according to the present invention. A silica layer 2 comprising mainly silica is formed on a polycarbonate 4 as a base material via a binding layer 3 and a photocatalyst layer 1 in which titanium oxide particles are dispersed is formed thereon. Here, the binding layer 3 is shown thick, but it actually cannot be viewed since it is formed extremely thin on the surface of each silica particle constituting the silica layer 3. Therefore, the binding layer does not necessarily exist on the polycarbonate 4 as a uniformly spread layer. The mechanism of the binding layer will be mentioned later.

[EXAMPLE 1]

[Preparation of titanium oxide dispersed water]

By adding a titanium oxide powder (Nippon Aerosil P25), with an average primary particle diameter of 21 nm, and a polymer dispersant (trade name: Disperbyk180, sold by BYK Japan KK), of a type that makes use of steric repulsion, to water and using a bead mill disperser as a disperser, an aqueous titanium oxide dispersion solution with a particle concentration of 30 weight% and an average dispersed particle diameter of 80nm was prepared. With this liquid, the titanium oxide particles were confirmed to be dispersed and stabilized without settling even upon elapse of no less than one year at normal temperature. The average dispersed particle diameter in the liquid was checked using the light scattering type particle size analyzer.
By using tetraethoxysilane as an alkoxysilane and performing hydrolysis and polycondensation using nitric acid as a catalyst, a tetraethoxysilane hydrolysis-polycondensation product solution, constituted of a water-ethanol

mixture solution with a solid concentration of 3 weight %, was prepared. The tetraethoxysilane hydrolysis-polycondensation product solution was confirmed to be stable for no less than one year at normal temperature and to harden by drying at normal temperature in approximately half a day.

[Mixing with hydrolysis-polycondensation product]

Then, using 3.3 weight parts of the prepared aqueous titanium oxide dispersion solution and 96.7 weight parts of the tetraethoxysilane hydrolysis-polycondensation product solution, using triethanolamine as an organic amine serving as a stabilizer that prevents gelling in a process of mixing the aqueous titanium oxide dispersion solution and the tetraethoxysilane hydrolysis-polycondensation product solution, these components were mixed with a normal stirrer prior to actual coating. The photocatalyst composition was confirmed to be stable without settling of particles and without gelling at a room temperature for approximately one week.

[Mixing of silane coupling agent]

Each kind of silane coupling agent is mixed with the above-mentioned photocatalyst mixture such that photocatalyst coating liquids summarized in Table 1 were obtained. Here, the silane coupling agents summarized in Table 1 were used.

[TABLE 1]

| No. | System | Name | Contents (wt%) |
|---|---|---|---|
| ① | Vinyl system | vinyl methoxysilane | 0.4 |
| ② | Vinyl system | vinyl ethoxysilane | 0.4 |
| ③ | Amino system | N-(2-aminoethyl) 3-amino propyl methyl dimethoxy silane | 0.4 |
| ④ | Amino system | N-(2-aminoethyl) 3-amino propyl trimethoxy silane | 0.4 |
| ⑤ | Amino system | 3-aminopropyltriethoxysilane | 0.4 |
| ⑥ | Amino system | 3-amino propyl trimethoxy silane | 0.4 |
| ⑦ | Amino system | N,N'-bis[3-(trimethoxy cyril) propyl] ethylenediamine | 0.4 |
| ⑧ | Epoxy system | 3-glycidoxypropyltrimethoxysilane | 0.4 |
| ⑨ | Epoxy system | 3-glycidoxypropyldimethoxysilane | 0.4 |
| ⑩ | Epoxy system | 2-(3,4-epoxycyclohexyl)ethyltrimethoxysilane | 0.4 |
| ⑪ | Methacryloxy system | 3-methacryloxypropyl trimethoxysilane | 0.4 |
| ⑫ | Mercapto system | 3-mercaptopropyltrimethoxysilane | 0.4 |
| ⑬ | Ketimine system | N-(1,3-dimethylbutylidene)-3-triethoxysilyl-1-propanamine | 0.4 |
| ⑭ | Cation system | N-[2-(vinylbenzylamino)ethyl]-3-aminopropyltrimethoxysilane hydrochloride | 0.4 |

[Application and coating film strength test]

Polycarbonate boards (TAKIRON Co., LTD., Model No. PS600) having approximately 1 mm thickness and the size of 20 mm X 20 mm were coated with photocatalyst coating liquids of Examples 1 to 16 by a dipping method. The coated samples were hanged vertically and dried at the room temperature for about half a day such that photocatalyst coating films were formed. Here, Example 8 was gelled and the coating could not be performed. Next day, hardness tests of the coating films (JIS5400K) were conducted such that the adhesion strength of the coating films were evaluated. The evaluation results are summarized in Table 2.

[TABLE 2]

| No. | Test results | | | | | |
|---|---|---|---|---|---|---|
| | In liquid | In application | | After film formation | | |
| | Stability | Hardening time | Wettability * note 1 | Translucency * note 1 | Hardness * note 2 | Adhesion * note 3 |
| ① | ○ | △*Hardening time increased | ○ | ○ | 3H | △*Cracked |
| ② | ○ | △*Hardening time increased | ○ | ○ | 3H | △*Cracked |
| ③ | △*Short life liquid | ○ | △ *Repellent | △*Translucency lowered | 3H | △*Cracked |
| ④ | △*Short life liquid | ○ | △ *Repellent | △*Translucency lowered | 3H | △*Cracked |
| ⑤ | △*Short life liquid | ○ | △ *Repellent | △*Translucency lowered | 3H | △*Cracked |
| ⑥ | △*Short life liquid | ○ | △ *Repellent | △*Translucency lowered | 3H | △*Cracked |
| ⑦ | △*Short life liquid | ○ | △ *Repellent | △*Translucency lowered | 3H | △*Cracked |
| ⑧ | ◎*Increased life | ○ | ○ | ○ | 3H | 100/100 |
| ⑨ | ○ | ○ | ○ | ○ | 3H | 100/100 |
| ⑩ | ○ | ○ | ○ | ○ | 3H | 100/100 |
| ⑪ | ○ | △*Hardening time increased | ○ | △*Translucency lowered | 1H *Hardness lowered | △*Cracked |
| ⑫ | × *Immediately gelled | | | | | |
| ⑬ | △*Short life liquid | ○ | △ *Repellent | △*Translucency lowered | 3H | △*Cracked |
| ⑭ | △*Short life liquid | ○ | △ *Repellent | △*Translucency lowered | 3H | △*Cracked |

In the above-mentioned Table 2, (note 1) the evaluation was performed by the visual test, (note 2) the evaluation was performed by the pencile hardness test as defined by JIS K5600-5-4, and (note 3) the evaluation was performed by the cross-cut test as defined by JIS K5600-5-6. As seen from the table, when a vinyl system of silane coupling agent was employed, the coating liquid was highly stable, but the time for hardening was increased and the adhesion strength was relatively low. On the other hand, when an epoxy system of silane coupling agent was employed, it was found that all the properties including adhesion strength were excellent. In particular, when 3-glycidoxypropyltrimethoxysilane was employed, the stability of the coating liquid was extremely excellent. And the adhesion strength with the methacryloxy system was relatively low as well as with the vinyl system.

Generally speaking, polycarbonate has the following chemical formula and is excellent in the transparency, impact resistance, heat resistance, flame resistance, and so on.

[Chemical formula 1]

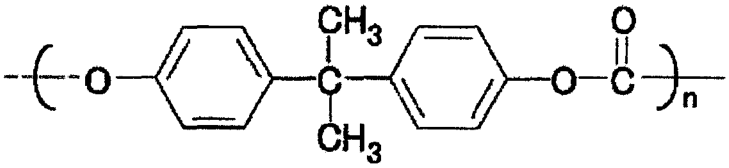

Since it is organic material, the surface is water-repellent, but with respect to the photocatalyst coating liquid having a silane coupling agent, the silane coupling agent is fixed to a surface of silica forming a silica layer by the hydrogen bond and/or the bond through dehydration while the functional group Y having binding ability is fixed to the surface of the polycarbonate by the chemical reaction or the like (see FIG. 10). Thus, the extremely thin surface bonding film, not a gradient material, binds both surfaces of the silica and the polycarbonate.

[Antifouling test]

The photocatalyst coating liquid of Example 7 was applied to one face of a polycarbonate board (TAKIRON Co., LTD., Model No. PS600) having a thickness of about 1 mm and a size of 300 mm X 300 mm such that a coating film of about 100 μm was formed. The coated board was held horizontally and dried at the room temperature for about half a day such that a photocatalyst film was formed. Two polycarbonate boards with thus-obtained coating films and one polycarbonate board itself as a control were prepared and stain of a mixture of oil/carbon black was attached to each of them. Further, one polycarbonate board itself and one polycarbonate board with the coating film were prepared as the control such that they were not smeared with the stain. And two of the smeared polycarbonate boards with the coating films were examined in a sealed state with a sealing material (almost no air intrusion) and in an open state, respectively, by the weather resistance test for 300 hours with a sunshine weather meter (Suga Test Instruments Co., Ltd., Model No. WEL-7XS-LHP.B.EC). The light source was a xenon arc light source as defined by JIS K 7350-2-1995. A board was also examined in an open condition by the weather resistance test for 300 hours with the sunshine weather meter.

Transmittance rate results of light and sunlight of the above-mentioned samples after the weather resistance test are shown in FIGs. 2 to 5. FIG. 2 shows transmittance rate results by the ordinary measurement method. The non-smeared polycarbonate original board and polycarbonate board with the coating film showed, as having been expected, almost 90% transmittance rate in the wavelength range of at least 400 nm. The results show slight absorbance by the coating film, but they are almost the same. On the other hand, the smeared polycarbonate board (without the coating film) after the weather resistance test was measured such that the transmittance rate was low and about 60% in the wavelength range of at least 450 nm, but the smeared polycarbonate board with the coating film after the weather resistance test was measured such that the transmittance rate was close to about 80%. The board without seal showed a little higher transmittance rate.

FIG. 3 shows results by a measurement method in which scatterd light was also collected by the integrating sphere. When the scattered light was collected, the smeared polycarbonate with the coating film had almost the same transmittance rate as the non-smeared polycarbonate board with the coating film. Therefore, the smeared polycarbonate with the coating film appeared a little whitish because light was scattered and the transmittance rate was lowered, but, if it is not so far from the polycarbonate substrate, the scattered light also can be used in a similar manner such that it can be considered that the scattered light even may contribute to the transmittance rate. For example, if the board is used for a cover of the solar battery, the distance from the solar battery is rather short such that it is considered that much of the scattered light can reach the solar battery. FIGs. 4 and 5 show the relative transmittance rate under the sunlight in the same manner as shown in FIGs. 2 and 3. The results are almost the same as shown in FIGs. 2 and 3. Here, FIG. 6 shows spectral illuminance of the standard sunlight as defined by JIS.

[Generation test]

The photocatalyst coating liquid of Example 7 was applied by the spray coating to one surface of a polycarbonate board (TAKIRON Co., LTD., Model No. PS600) having a thickness of about 1 mm and a size of 100 mm X 100 mm to form a coating film with a thickness of about 100 μm such that the polycarbonate board with the coating film was prepared in the same manner as mentioned above. A light-receiving face (64 X 28 mm) of the solar battery was completely covered with this protective material and was continuously irradiated by an artificial solar light source (Model SS-301S by Ushio Inc.) with the strength of 45 mW/$cm^2$. When it was covered with the protective material, the distance between the ligh-receiving face of the solar battery and the protective material was about 2 mm. The surface temperature of the light-receiving face of the solar battery was measured by the thermocouple and when the temperature became 28 °C, the open voltage $V_{oc}$ and the short current $I_{sc}$ were measured by a multimeter.

The feature characteristic test of the solar battery can be conducted by drawing the current/voltage curve as shown in FIG. 7 and evaluating the area confined by the curve. Generally speaking, the shape of the curve is close to a rectangular shape such that it can be generally evaluated by "short current density $i_{sc}$ X open circuit voltage $V_{oc}$". This time, it is not the test for the solar battery itself and it cannot be thought that the shape of the current/voltage curve would be changed largely with and without the protective cover such that it suffices that the relative change of the short current density $i_{sc}$ and open circuit voltage $V_{oc}$ is measured. Moreover, the test is relative evaluation using the same colar battery such that the short current $I_{sc}$ can be a substitute of the short current density $i_{sc}$. In comparision with the regular test, the strength of the sunlight can be 45 mW/cm$^2$ instead for 100mW/cm$^2$, and the temperature can be 28 °C instead for 25 °C, and the relative evaluation can be performed instead for the absolute evaluation. Also, polycrystal silicon was employed for the solar battery. It is possible that the results may be slightly changed with other kinds of solar batteries.

The experimental results are summarized in Table 3. Here, the protective materials were a polycarbonate board (original board), a polycarbonate with the coating film of photocatalyst coating (Example 7) having undergone the above-mentioned weather resistance test for 300 hours after it was stained with the oil/carbon black, and a polycarbonate board (original board) having undergone the above-mentioned weather resistance test for 300 hours after it was stained with the oil/carbon black.

[TABLE 3]

| Experiment No. | Protective material | Voc (V) | Isc (mA) |
|---|---|---|---|
| A-1 | None | 2.22 | 54 |
| A-2 | Polycarbonate board | 2.21 | 49 |
| A-3 | With photocatalyst | 2.21 | 49 |
| A-4 | Without photocatalyst | 2.19 | 41 |

As seen from the table, it was found that the protective material with the photocatalyst after the weather resistance test could obtain the same voltage and current as the original board of the control did. On the other hand, the protective material without the photocatalyst showed significantly lowered both voltage and current. From this, the antifouling ability of the photocatalyst was confirmed.

[Application of solar cell generation]

FIG. 8 shows schematically a main portion 10 of the solar cell generation. A protective material 14 covers over a solar battery cell 12. The protective material 14 is polycarbonate which is superior in the impact resistance and the strength. A surface 15 of the protective material 14 is exposed to rain, wind, and the like since it is arranged outdoor, but the photocatalyst coating film (Example 7) is attached thereto. In this way, the light with high energy of relatively short wavelength from the sunlight 20 activates the photocatalyst on the surface 15 such that stain is oxidatively decomposed by the active oxygen. Also, since the surface becomes hydrophilic because of effects by the active oxigen, a washing effect with rain or the like can be enhanced. In this figure, it is arranged horizontally, but the solar battery is normally arranged in a tilted manner to face south such that self cleaning effects with rain are expected. Here, in the wavelength range of light for the solar cell generation, the protective material has high enough transmittance rate and has little effect by the photocatalysis to absorb the light enery.

FIG. 9 shows schematically an example of an indoor vegitable garden utilizing a solar cell geneation. Over the solar battery cell 12, a protective material 14 made of polycarbonate and photocatalyst on a surface thereof are arranged. By the light energy from the sunlight 20, electricity is provided to a LED 22 disposed in a lower part through a lead 23. Thus, a plant 30 grows over an artificial soil 32. In this figure, the LED is disposed immediately under the solar battery cell, but, if the lead 24 extends, electricity can be provided from the solar cell generation arranged on the roof to the LED 22 of the artificial vegitable garden arranged in the basement. In this way, it is possible to prevent abnormal warming in the city by the sunlight as well as to culture vegitable in the city. In particular, it is unlikely that the wavelength range of light to be utilized by the photocatalysis overlaps the wavelength range of light to be utilized by the solar battery such that the effiency of the light energy utility is lowered. Moreover, the LED can emit suitable ligh energy to each plant to grow such that the ligh energy can be efficiently utilized.

[Incident light, transmissive light, reflective light]

FIG. 11 is a diagram illustrating a principle how the light enters into a protective base material 14a with a photocatalyst coating film 15a. The protective base material 14a may be, for example, translucent inorganic glass such as quartz glass, soda glass and the like and translucent organic glass such as acryl, polycarbonate and the like. The photocatalyst coating film 15a comprises any kind of photocatalyst coating or photocatalyst layer as described in the present specification. Typically, the photocatalyst coating film 15a comprises silica and titania with relative weight ratio of 2 to 1 and respective refracctive indices are 1.4 and 2.1, and, if the refractive index of the film is determined by the weighted average, the refractive index may be (1.4 X 2 + 2.1 X 1) / (2+1) = 1.63. On the other hand, the protective base material 14a has each refractive index of 1.45 for the quartz glass or 1.585 for the polycarbonate. Thus, the light 21 having entered at an incident angle of θ1 is, at the surface of the photocatalyst coating film 15a, reflected 21r, absorbed, and transmitted. The transmitted light enters the photocatalyst coating film 15a at the refraction angle θ2, and is, at the interface between the photocatalyst coating film 15a and the protecive base material 14a, partially reflected and absorbed, but most of the light is refracted at the refractive angle θ4 and transmitted 21t. In this case, the Snell's formular is applied as follows.

$$\sin(\theta 1) / \sin(\theta 2) = 1.63 / 1 = 1.63$$

If it is quartz glass, the formula is as follows.

$$\sin(\theta 3) / \sin(\theta 4) = 1.45 / 1.63 = 0.89$$

If it is polycarbonate, the formula is as follows.

$$\sin(\theta 3) / \sin(\theta 4) = 1.585 / 1.63 = 0.97$$

Here, it is clear from the figure that θ2=θ3.

That is, the light enters deeper because of the refraction of the photocatalyst coating film 15a and the light enters a little shallower because of the next protective base material 14a. Here, if the reflection, the absorption, and the like at the interface beween the photocatalyst coating film 15a and the protective base material 14a are ignored, the incident light amount A21 is divided into a reflected light amount A21r, a transmitted light amount A21t, and an absorbed light amount. Since what is utilized in the solar cell generation is the transmitted light amout A21t, it is preferable that the reflection and absorption are small.

Next, the light reflectance rate will be discussed. FIG. 12 shows a typical light incident model. In general, when the light is reflected at the interface, the reflected light exhibits a change of vibration amplitude and a phase jump. Where the amplitude reflectance is referred to as r and the phase jump is referred to as δ, the complex amplitude reflectance is given by r·exp(iδ). The value of the complex amplitude reflectance is determined by the incident angle of the lihgt and the refractive index at the interface. The complex amplitude reflectance is also affected by the polarization state of the incident light. Where a component of the light vibrating in the incidnet face of the electronic vector is designated to P component (P polirization) and a component of the light vibrating vertically to the incidnet face of the electronic vector is designated to S component (S polirization), when the light enters with an incident angle of θ1 into the trasparent medium having the refractive index of n from the air, the formula of Fresnel coefficient is as follows.

$$rp = [n\cdot\cos(\theta 1) - \cos(\theta 2)]/[n\cdot\cos(\theta 1) + \cos(\theta 2)]$$
$$= \tan(\theta 1 - \theta 2) / \tan(\theta 1 + \theta 2)$$

$$rs = [\cos(\theta 1) - n\cdot\cos(\theta 2)] / [\cos(\theta 1) + \cos(\theta 2)]$$
$$= \sin(\theta 1 - \theta 2) / \sin(\theta 1 + \theta 2)$$

When the reflectance face is transparent material such as water and glass, the Fresnel coefficient (complex

amplitude reflectance) becomes real number such that it can be assumed that δ=0 or Π. FIG. 13 shows intensity reflectance. With the P polarization, the reflectance becomes 0 at Brewster's angle (polarization angle θB). From the formula of Fresnel coefficient with respect to P polarization, the following formula may be established.

$$\tan(\theta B) = n .$$

The incident light of the sunlight includes respective components of P polarization and S polarization, and if all the components of the sunlight can be P polarization component, almost no light is reflected at the Brewster's angle and most of the light can be utilized as the transmitted light. The Brewster's angle depends on the refractive index such that it becomes larger if the refractive index becomes larger. That is, the higher the refractive index (for example, photocatalyst coating film) is, the higher the incident angle can be as the Brewster's angle. Further, as seen from FIG. 13, if the incident angle becomes larger than 80° (corresponding to 10° of elevation angle with respect to the face of the protective material 14), in particular, the reflectance becomes high in the P polarization and the S polarization. Therefore, it is preferable to avoid such an angle and, for example, the face of the protective material 14 and the like may be automatically moved in accordance with the movement of the sun.

FIG. 14 is a diagram showing schematically movement of the sun when the solar cell generation is performed. An ellipse 50 represents the horizontal line and a semicircular shape 52 represents the ecliptic. Typically, the solar cell generation module (solar battery cell) 12 is irradiated with light through a protective material 14 (typically, transparent inorganic or organic material coated with photocatalyst coating) and generates power. In this case, the sun 20 rises from the east (the inner side in the drawing), culuminates, and set in the west (the near side in the drawing). The solar battery cell 12 is typically fixed to the roof or the like such that the sunlight in the morning enters with the relatively large indicent angle of θ1. Therefore, as shown in FIG. 13, most of the component of the S polarization is reflected 12r at the reflectance angle θr such that it cannot be utilized by the solar cell generation. On the other hand, the component of the P polarization is hardly reflected such that it should be understood that it is transmitted 12t and efficiently utilized. Therefore, with respect to the light with this high incident angle, the light may be polarized to include more P polarization component by the polarization element 60 such that the light is efficiently utilized.

With resepect to such a polarization element 60, by way of example, a light polarizer can be utilized to extract the P polarization component and only such component can be irradiated to the solar cell generation module 12. Further, a birefringent crystal such as calcite can be utilized such that the monochromatic incident beam can be separated into two beams having opposing polarization with each other. These two beams normally travel in respectively different directions with respectively differnt speeds. The energy of the original beam is divided between the two new beams and the ratio thereof depends on a relative angle between the polarization vector and the light axisis of the original beam. In this way, in particular, the light having more P polarization component is irradiated to the solar cell generation module (solar battery cell) 12. Also, something like polarizing cube beamsplitters can be used.

Here, as mentioned above, the solar cell generation module 12 is normally fixed to the roof facing the south and arranged such that the module can receive most light amount (that is, light energy) when the sun culminates. However, it is preferable to continue generation of as much power as possible in the morning and in the late afternoon and it is possible to contrive various ways in order to obtain necessary light amount. For example, with a predetermined angle of elevation, e.g., an angle (the incident angle is 0°) where the sunlight enters approximately vertically when the sun culminates, or an incident angle, which is larger but a predetermined angle (e.g., 5° or less), the solar cell module 12 is fixed, and a solar cell gneration system comprising the solar cell module 12 and a protective material thereof 14 can be configured. Here, a polarization element 60 which can adjust the polarization components as describe above (in particular, the P polarization component is increased) can be further included. It is preferable that the polarization element 60 is arranged such that the angle can be freely changed in accordance with the position of the sun. It is preferable to conduct an automatic adjustment. And it is preferable to provide it in an attachable and detachable manner. It is preferable to remove it if the reflectance ratio is low at the time when the sun culminates. As such polarization element 60, any commercially available polarization element can be utilized. And the separated polarization component may be transformed in the phase and mixed with a polarized light phse. Since more light amount can be utilized, this arrangement is preferable.

[Explanation of Numerical References]

10 main part of solar cell generation
12 solar battery cell

14 protective material
15 surface of protective material
20 sunlight
22 LED
24 lead
30 plant
32 artificial soil

## Claims

**1.** An antifouling acrylic board comprising:

an acrylic base material;
a silica layer including silica as a main constituent and formed on a surface of the acrylic base material;
a photocatalyst layer including titanium oxide particles dispersed in a silica matrix and formed on the silica layer; and
a binding layer constituted of a silane coupling agent and provided between the surface of the acrylic base material and the silica layer.

**2.** The antifouling acrylic board according to claim 1 wherein the silane coupling agent is a silane coupling agent of an epoxy system.

**3.** The antifouling acrylic board according to claim 1 wherein the silane coupling agent is a silane coupling agent of a vinyl system.

**4.** The antifouling acrylic board according to any one of claims 1 to 3 wherein the binding layer is formed by applying to the surface of the acrylic base material a mixed composition including a first composition comprising titanium oxide particles dispersed in an aqueous solvent and having an average primary particle diameter 5 to 50 nm and an average dispersed particle diameter of 10 to 100 nm and a polymer dispersing agent; a second composition comprising alkoxysilane hydrolysis-polycondensation product; and the silane coupling agent, the mixed composition having a pH value in a range of 5 to 9.

**5.** The antifouling acrylic board according to any one of claims 1 to 4 wherein the polymer dispersing agent comprises alkylammonium salt of a block copolymerization product including an acid group as a main constituent.

**6.** The antifouling acrylic board according to any one of claims 1 to 5 wherein a total thickness of the silica layer and the photocatalyst layer is not-exceeding 100 nm, and the titanium oxide particles are fixed in a nearly-isolated dispersion state in the photo catalyst layer.

**7.** A weather resistant solar cell utilizing an antifouling acrylic board as recited in any one of claims 1 to 6 as a protective cover.

**8.** A method of forming a photocatalyst layer including titanium oxide particles dispersed in a silica matrix on a surface of an acrylic base material, the method comprising the steps of:

preparing an aqueous solution having dispersed titanium oxide particles by adding titanium oxide powder and a polymer dispersing agent to water;
preparing a tetraethoxysilane hydrolysis-polycondensation product solution by performing hydrolytic polycondensation of alkoxysilane;
preparing a mixed solution by mixing the aqueous solution having dispersed titanium oxide particles and the tetraethoxysilane hydrolysis-polycondensation product solution;
preparing a photocatalyst coating material adhesive to the acrylic base material by mixing a silane coupling agent with the above mixed solution; and
applying the photocatalyst coating material to a surface of the acrylic base material.

**9.** The method accoridng to claim 8 wherein an antigelling and stabilizing agent comprising organic amine is mixed in the step of preparing the mixed solution.

Fig. 1

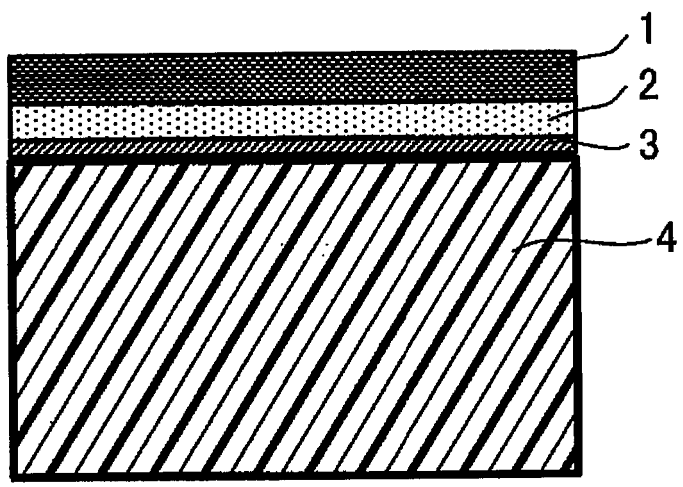


Fig. 2

Results by ordinary measurement method

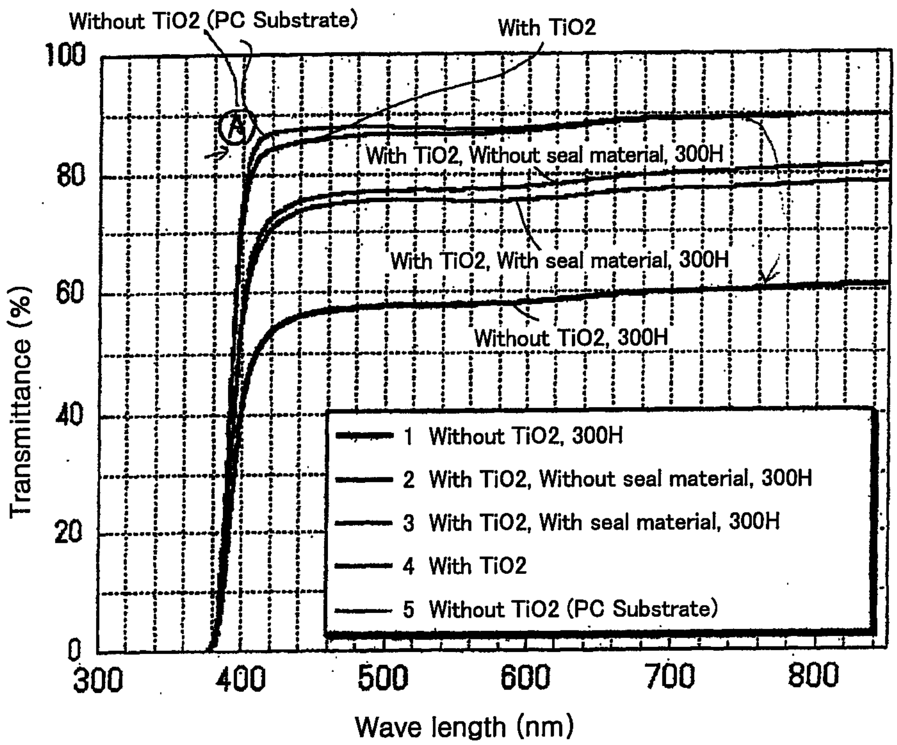

*Fig. 3*

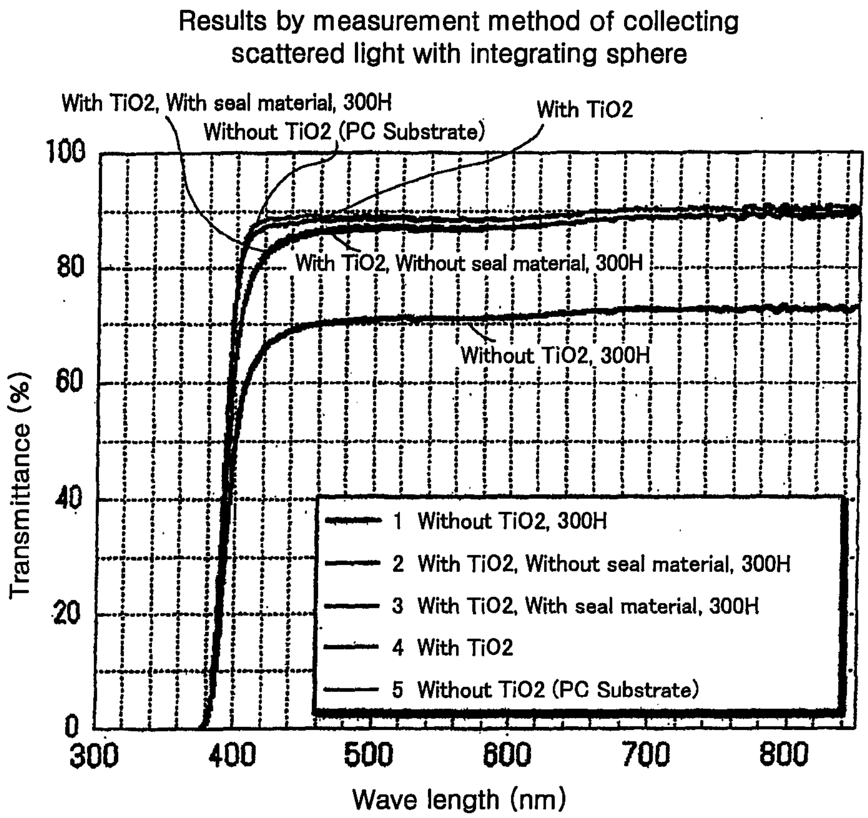


*Fig. 4*

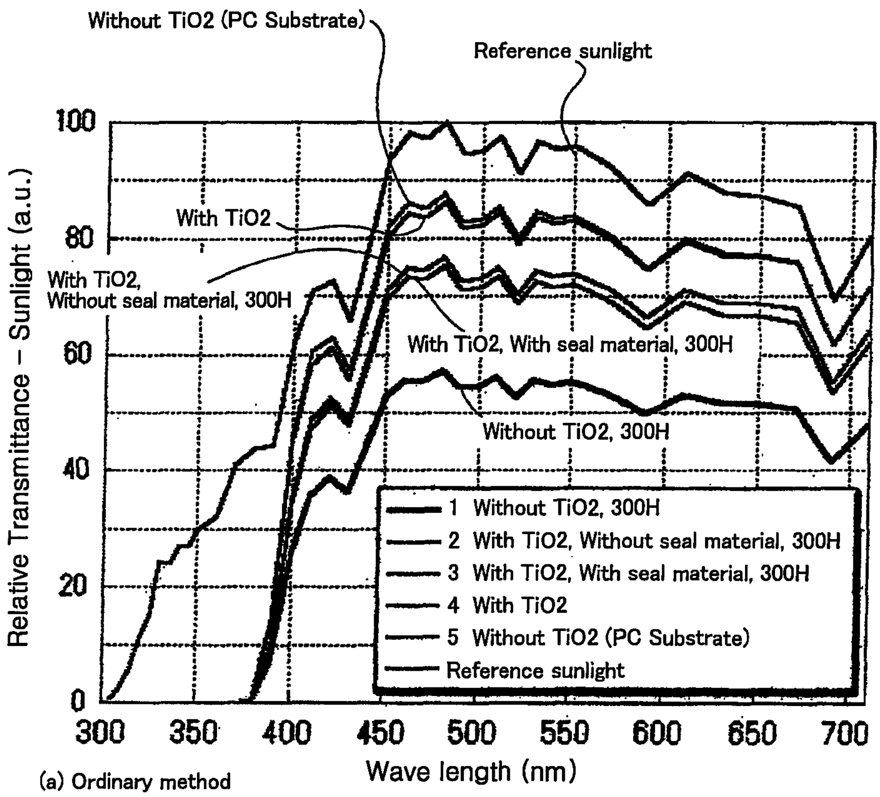


(a) Ordinary method

*Fig. 5*

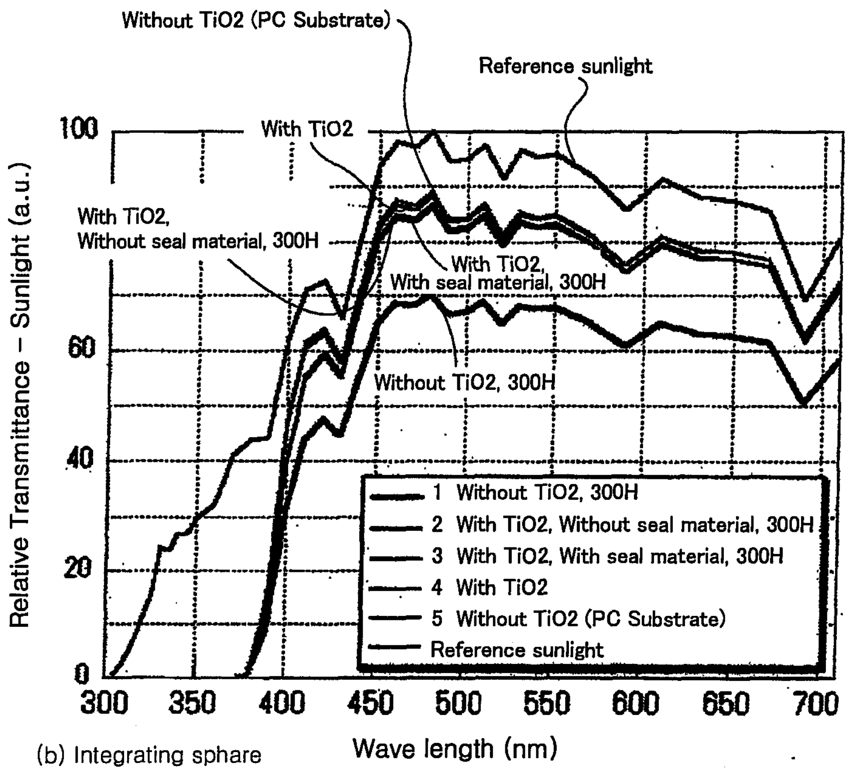
Without TiO2 (PC Substrate)
Reference sunlight
With TiO2
With TiO2, Without seal material, 300H
With TiO2, With seal material, 300H
Without TiO2, 300H
Relative Transmittance - Sunlight (a.u.)
100
60
40
20
0
300
350
400
450
500
550
600
650
700
1 Without TiO2, 300H
2 With TiO2, Without seal material, 300H
3 With TiO2, With seal material, 300H
4 With TiO2
5 Without TiO2 (PC Substrate)
Reference sunlight
(b) Integrating sphere
Wave length (nm)

*Fig. 6*

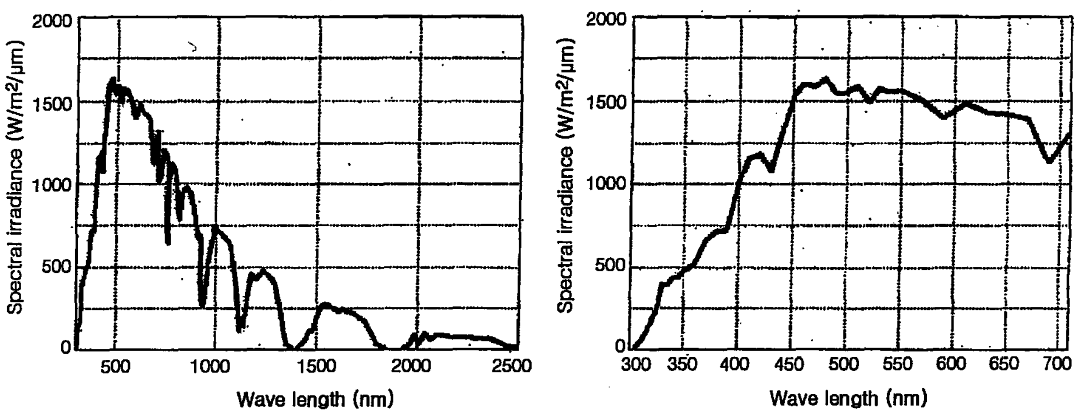
Spectral irradiance (W/m2/μm)
2000
1500
1000
500
0
500
1000
1500
2000
2500
Wave length (nm)
Spectral irradiance (W/m2/μm)
2000
1500
1000
500
0
300
350
400
450
500
550
600
650
700
Wave length (nm)

*Fig. 7*

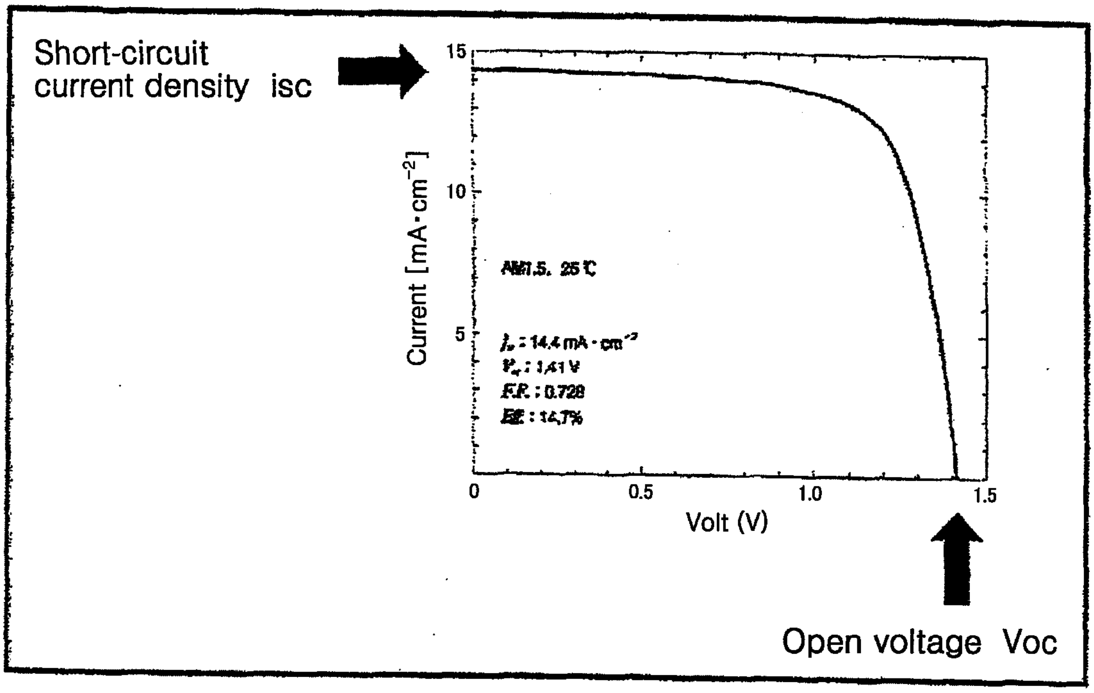

Short-circuit
current density isc
Current [mA·cm⁻²]
15
10
5
0
0.5
1.0
1.5
Volt (V)
AM1.5, 25℃
F.F. : 0.728
Open voltage Voc


*Fig. 8*

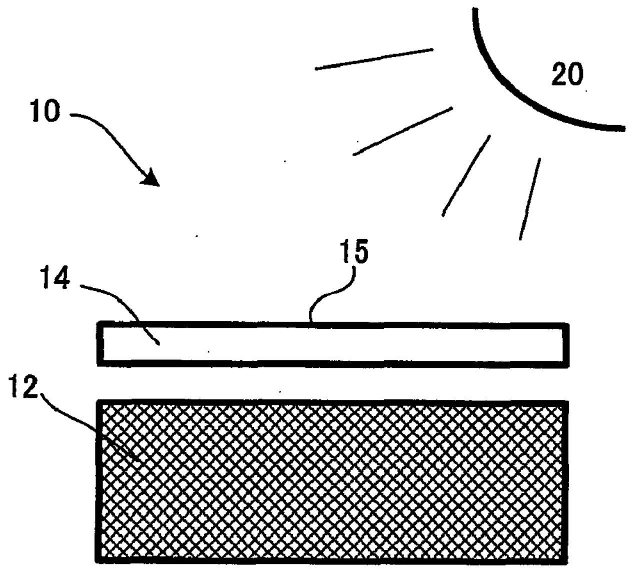

10
20
15
14
12

*Fig. 9*

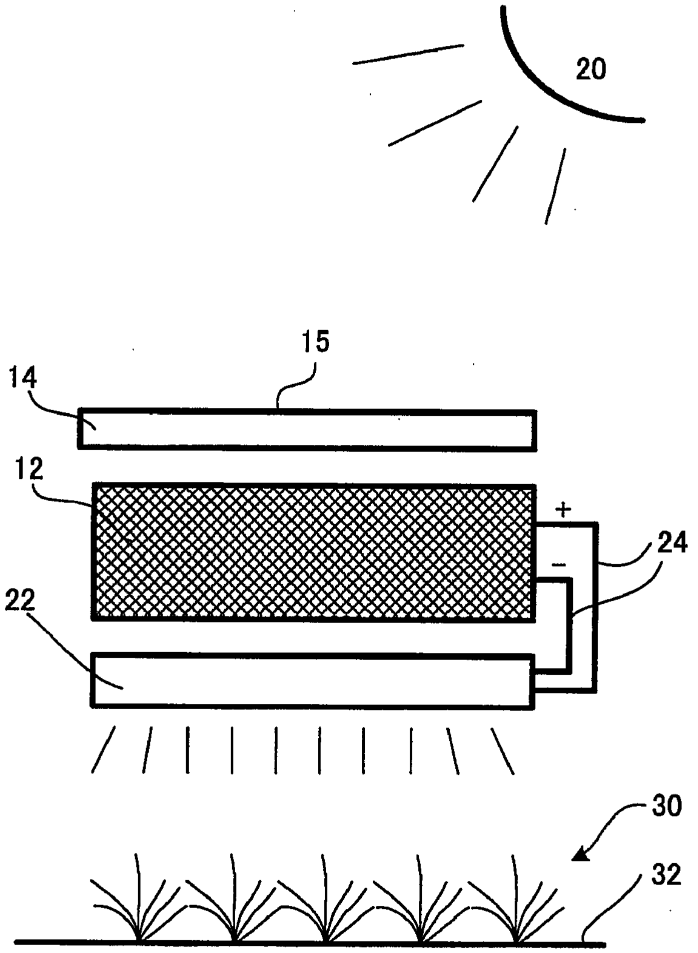


*Fig. 10*

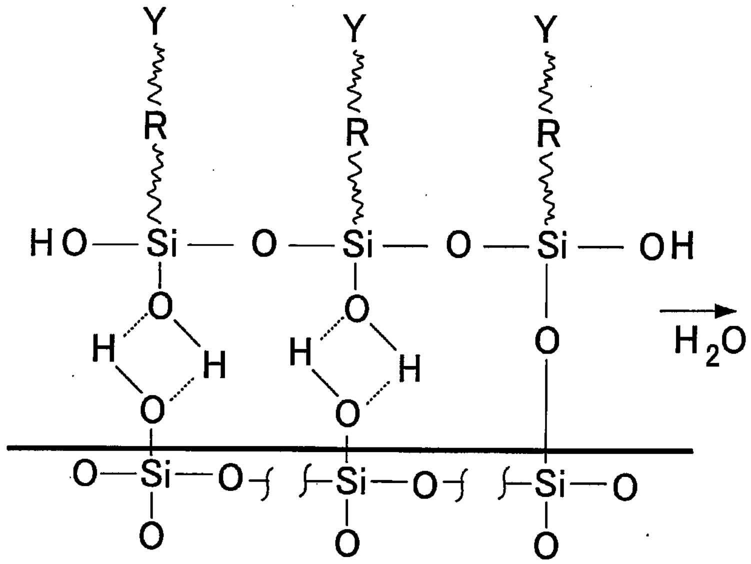

*Fig. 11*

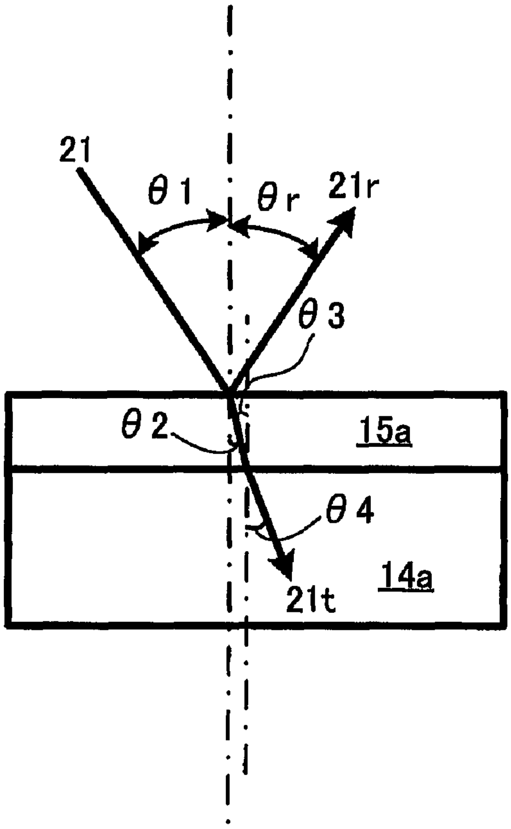
21
θ1
θr
21r
θ3
θ2
15a
θ4
14a
21t

*Fig. 12*

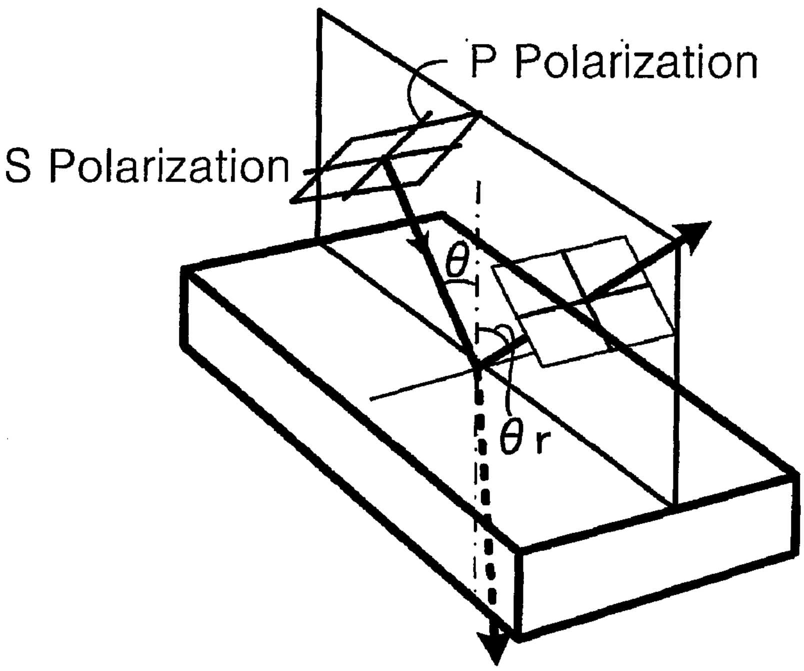
P Polarization
S Polarization
θ
θr

*Fig. 13*

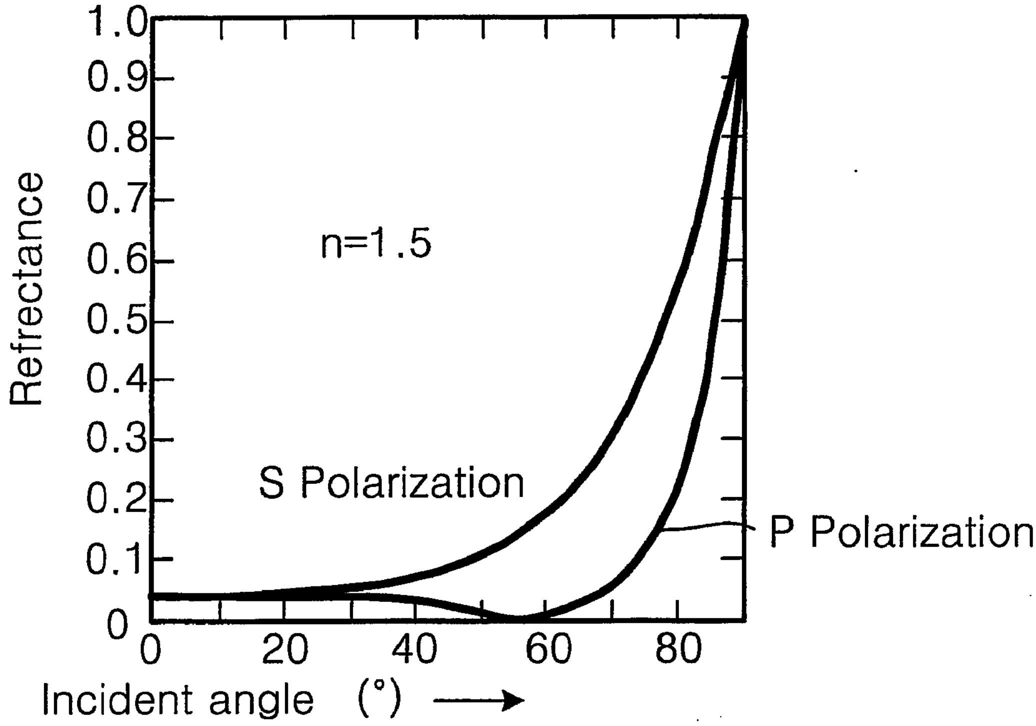
1.0
0.9
0.8
0.7
0.6
0.5
0.4
0.3
0.2
0.1
0
Refrectance
n=1.5
S Polarization
P Polarization
0
20
40
60
80
Incident angle (°)

*Fig. 14*

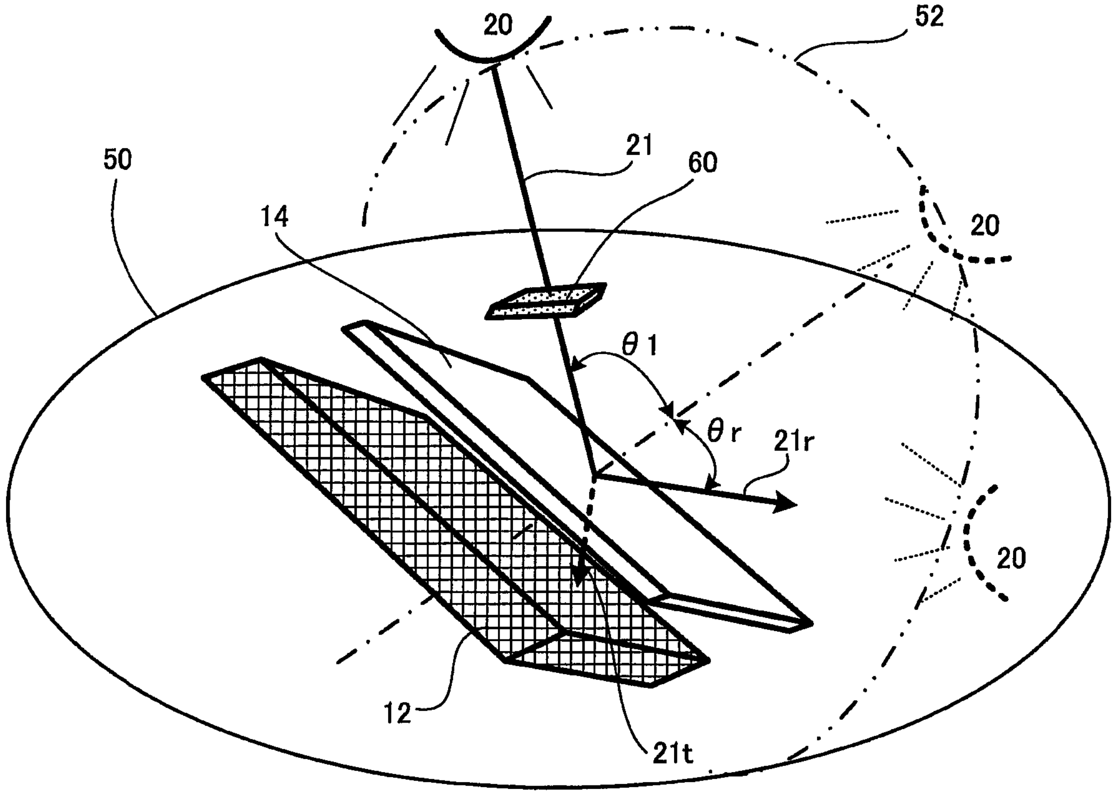
20
52
21
60
50
14
20
θ1
θr
21r
20
12
21t

## INTERNATIONAL SEARCH REPORT

International application No.
PCT/JP2010/070410

A. CLASSIFICATION OF SUBJECT MATTER
*B32B9/00*(2006.01)i, *B01J21/06*(2006.01)i, *B01J35/02*(2006.01)i, *C09D5/16*(2006.01)i, *C09D7/12*(2006.01)i, *C09D183/02*(2006.01)i

According to International Patent Classification (IPC) or to both national classification and IPC

B. FIELDS SEARCHED
Minimum documentation searched (classification system followed by classification symbols)
B32B1/00-43/00, B01J21/06, B01J35/02, C09D1/00-201/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2005-261997 A (NBC Inc.), 29 September 2005 (29.09.2005), claim 1; paragraphs [0007], [0020], [0025], [0026], [0035], [0036], [0040] (Family: none) | 1-3<br>1-9 |
| Y | WO 2007/097284 A1 (Tam Network Co., Ltd.), 30 August 2007 (30.08.2007), claims 1, 5, 9; paragraphs [0018], [0019], [0026], [0040] to [0042] & US 2009/0317624 A1 & EP 1997860 A1 | 1-9 |
| Y | JP 9-83005 A (Toto Ltd.), 28 March 1997 (28.03.1997), claim 1; paragraphs [0001], [0002] & US 6830785 B1 & EP 1712530 A2 | 7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 January, 2011 (28.01.11) | 15 February, 2011 (15.02.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No.
PCT/JP2010/070410

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-348512 A (Nippon Soda Co., Ltd.), 18 December 2001 (18.12.2001), paragraph [0007] (Family: none) | 4 |
| A | JP 2007-47605 A (Toyo Ink Manufacturing Co., Ltd.), 22 February 2007 (22.02.2007), paragraph [0022] (Family: none) | 4,5,8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002361807 A
- JP H07171408 B
- JP 2003010696 A
- JP 2000150936 A


### Non-patent literature cited in the description


- Powder Body for Test and Particle for Test. Basic Physical Properties of Powder